# EUROPÄISCHE PATENTSCHRIFT

(11) **EP 3 287 271 B1**
(45) Veröffentlichungstag und Bekanntmachung des Hinweises auf die Patenterteilung: **18.11.2020**
(21) Anmeldenummer: 16185830.3
(22) Anmeldetag: 26.08.2016
(51) Int. Cl.: B32B 7/04, B32B 7/10, B32B 9/00, B32B 9/04, B32B 7/02, B32B 19/00, B32B 19/04, B32B 27/06, B32B 27/14, B32B 27/18, B32B 27/20, B32B 27/28, B32B 1/00, B32B 1/04, B32B 3/02, B32B 3/04, B32B 3/06, B32B 3/26, B32B 3/30, B32B 3/28

(54) **FOLIE ZUM AUSBILDEN EINER LUFTSTRÖMUNGSFLÄCHE AN EINEM KÖRPER, AUSSENHÜLLENTEIL FÜR EIN FAHRZEUG UND VERFAHREN ZUM AUSBILDEN EINER LUFTSTRÖMUNGSFLÄCHE AN EINEM KÖRPER**
FILM FOR FORMING AN AIR FLOW SURFACE ON A BODY, OUTER CASING PART FOR A VEHICLE AND METHOD FOR FORMING AN AIR FLOW SURFACE ON A BODY
FEUILLE DE FORMATION D'UNE SURFACE DE FLUX D'AIR SUR UN CORPS, PARTIE D'ENVELOPPE POUR UN VEHICULE ET PROCEDE DE FORMATION D'UNE SURFACE DE FLUX D'AIR SUR UN CORPS

(43) Veröffentlichungstag der Anmeldung: 28.02.2018
(73) Patentinhaber: Airbus Defence and Space GmbH, 82024 Taufkirchen (DE)
(72) Erfinder: Bonaccurso, Elmar, 85635 Höhenkirchen (DE); Herrles, Christian, 85667 Oberframmern (DE); Rohr, Oliver, 85521 Ottobrunn (DE); Meyer, Meinhard, 81739 München (DE); Fietzek, Heiko, 83233 Bernau (DE); Wehr, Jürgen, 85617 Aßling (DE); Bagehorn, Sarah, 80804 München (DE); Mika, Lothar, 81671 München (DE); Nixon, Sonja, 81379 München (DE); Rico-Oller, Beatriz, 28943 Fuenlabrada (Madrid) (ES); Englhart, Martin, 83104 Schönau (DE); Jonke, Dietrich, 82024 Taufkirchen (DE); Senani, Sophie, 75014 Paris (FR); Brambilla, Fabien, 94700 Maisons-Alfort (FR); Suel, Stéphane, 78590 Noisy-le-roi (FR); Guillou, Marie-Paule, 93160 Noisy-Le-Grand (FR)
(74) Vertreter: Isarpatent

(56) Entgegenhaltungen:
- US-A1- 2010 012 268
- US-A1- 2010 084 819
- US-A1- 2013 037 215
- US-A1- 2014 130 318
- US-A1- 2014 255 632
- US-A1- 2016 009 369

## Beschreibung

Die vorliegende Erfindung betrifft eine Folie zum Ausbilden einer Luftströmungsfläche an einem Körper, Außenhüllenteile für Fahrzeuge, einen Propeller für eine Windkraftanlage und Verfahren zum Ausbilden einer Luftströmungsfläche an einem Körper.

Obwohl auf beliebige Körper mit Luftströmungsflächen anwendbar, werden die vorliegende Erfindung und die ihr zugrunde liegende Problematik in Bezug auf Außenhüllenteile für Fahrzeuge, insbesondere für Flugzeuge, näher erläutert.

Aus dem Stand der Technik ist es bekannt, Folien an Flugzeugen anzubringen. Beispielweise beschreibt die US 2013/0037215 A1 eine Trennfolie zur Verwendung beim Flugzeugbau.

Die US 2016/0009369 A1 betrifft eine Schutzmatte zum Schützen von Teilen eines Tragflügels eines Flugzeugs gegen Sand- und Wassererosion. Die Schutzmatte umfasst einen Polymerfilm und einen Metallstreifen und soll so geformt sein, dass der Metallstreifen Wassererosions-gefährdete Flächen des Tragflügels abdeckt, während Sanderosions-gefährdete Flächen des Tragflügels mittels des Polymerfilms abgedeckt sind.

Aus dem Stand der Technik ist es ferner bekannt, Luftströmungsflächen von Flugzeugen mit einer Riblet-Oberflächenstruktur zu versehen (siehe z.B. S. S. Saravi und K. Cheng: "A REVIEW OF DRAG REDUCTION BY RIBLETS AND MICRO-TEXTURES IN THE TURBULENT BOUNDARY LAYERS", European Scientific Journal, November 2013, edition vol. 9, No. 33, ISSN: 1857-7881 (Print), Seiten 62-81). Mittels der Riblet-Oberflächenstrukturen soll eine aerodynamische Reibungsminderung an den Luftströmungsflächen bewirkbar sein.

Auch die US 2014/0130318 A1 beschreibt Ribletstrukturen, welcher zur Widerstandsverminderung an Flugzeugen ausgebildet sind. An einer Außenoberfläche der Ribletstrukturen kann eine Oxidschicht mit darin ausgebildeten Poren liegen, welche noch zusätzlich mit einer Imprägnierung versehen sein kann. Dies soll einer Verschmutzung oder einer Eisbildung an der Außenoberfläche der Ribletstrukturen entgegen wirken.

Allerdings sind Riblet-Oberflächenstrukturen aufgrund ihrer Topographie im Vergleich mit glatten Oberflächen anfälliger für Verschmutzungen, welche sich in Vertiefungen anlagern können. Zusätzlich sind Riblet-Oberflächenstrukturen schwieriger zu reinigen als glatte Oberflächen.

Es ist daher die Aufgabe der vorliegenden Erfindung, weniger verschmutzungsanfällige und/oder leichter zu reinigende Luftströmungsflächen für einen Körper mit einem geringen Luftwiderstand zu schaffen.

Erfindungsgemäß wird diese Aufgabe durch eine Folie zum Ausbilden einer Luftströmungsfläche an einem Körper mit den Merkmalen des Patentanspruchs 1, ein

Außenhüllenteil für ein Fahrzeug mit den Merkmalen des Anspruchs 5, ein Außenhüllenteil für ein Fahrzeug mit den Merkmalen des Anspruchs 6, einen Propeller für eine Windkraftanlage mit den Merkmalen des Anspruchs 11, ein Verfahren zum Ausbilden einer Luftströmungsfläche an einem Körper mit den Merkmalen des Anspruchs 12 und ein Verfahren zum Ausbilden einer Luftströmungsfläche an einem Körper mit den Merkmalen des Patentanspruchs 13 gelöst.

Die der vorliegenden Erfindung zugrunde liegende Idee besteht darin, dass durch das zumindest teilweise Auffüllen der Vertiefungen und/oder der Zwischenräume zwischen benachbarten Vorsprüngen mit der mindestens einen Füllmasse eine bei Raumtemperatur (298 Kelvin) glattere Luftströmungsfläche bewirkbar ist, welche weniger verschmutzungsanfällig ist und sich leichter reinigen lässt. Trotzdem weist diese Luftströmungsfläche bei tieferen Temperaturen, wie beispielsweise zwischen 243 Kelvin bis 213 Kelvin, eine Vielzahl von Vertiefungen und/oder Vorsprüngen/Erhebungen auf, welche einen Luftwiderstand eines mit der jeweiligen Luftströmungsfläche ausgebildeten Körpers reduzieren. Dies kann insbesondere bei der Ausbildung der jeweiligen Luftströmungsfläche an einem Flugzeug zur Verringerung eines Treibstoffverbrauchs und zur Reduzierung einer Kohlenstoffdioxid/Stickstoffoxid-Emission während eines Flugs des Flugzeugs (typischerweise bei Außentemperaturen zwischen 243 Kelvin und 213 Kelvin) genutzt werden. Auch für einen anderen Fahrzeugtyp/Kraftfahrzeugtyp, wie beispielsweise ein Automobil, ein Motorrad, ein Luftfahrzeug (wie z.B. ein Flugzeug und ein Hubschrauber), ein Raumfahrzeug, eine Rakete, ein Wasserfahrzeug (beispielsweise ein Schiff, ein Boot und ein U-Boot) ein Luftkissenfahrzeug und eine Bahn (insbesondere eine Magnetschwebebahn), und einen Propeller einer Windkraftanlage ist die jeweilige Luftströmungsfläche vorteilhaft.

Als das mindestens eine Material mit dem mindestens einen ersten thermischen Ausdehnungskoeffizienten können beispielsweise Aluminium (Längenausdehnungskoeffizient 23•10⁻⁶K⁻¹), Titan (Längenausdehnungskoeffizient 9•10⁻⁶K⁻¹), Stahl (Längenausdehnungskoeffizient 12•10⁻⁶K⁻¹), Polyurethan (Längenausdehnungskoeffizient 20•10⁻⁶K⁻¹ bis 40•10⁻⁶K⁻¹), Epoxidharz (Längenausdehnungskoeffizient 20•10⁻⁶K⁻¹ bis 40•10⁻⁶K⁻¹) und/oder Polyetheretherketon (PEEK, Längenausdehnungskoeffizient 50•10⁻⁶K⁻¹) eingesetzt sein/werden. Als die mindestens eine Füllmasse mit dem mindestens einen zweiten thermischen Ausdehnungskoeffizienten können Polysulfide (Längenausdehnungskoeffizient 60•10⁻⁶K⁻¹ bis 80•10⁻⁶K⁻¹) und/oder Polythioether (Längenausdehnungskoeffizient 60•10⁻⁶K⁻¹ bis 80•10⁻⁶K⁻¹) verwendet sein/werden. Die hier aufgezählten Materialien sind jedoch nur beispielhaft zu interpretieren.

In den Unteransprüchen finden sich vorteilhafte Ausgestaltungen und Verbesserungen der Erfindung.

In einer vorteilhaften Ausführungsform der Folie sind eine mittlere Rauheit und/oder eine quadratische Rauheit einer zumindest teilweise aus dem mindestens einen Füllmaterial gebildeten Außenoberfläche der Folie bei 243 Kelvin größer als bei 273 Kelvin. Ein mit der Folie bestückter Körper weist damit eine Luftströmungsfläche auf, welche sich bei höheren Temperaturen leichter reinigen lässt, jedoch bei tieferen Temperaturen aufgrund ihrer gesteigerten mittleren Rauheit und/oder quadratischen Rauheit einen geringen Luftwiderstand hat. Die hier beschriebene Ausbildungsform der Folie eignet sich somit besonders zum Bestücken eines Fahrzeugs/Kraftfahrzeugs (als dem Körper).

Vorzugsweise ist die Außenoberfläche der Folie bei 298 Kelvin glatt. Dies bewirkt einen "Easy-to-Clean-Effekt" bei Raumtemperatur.

Gemäß einer bevorzugten Weiterbildung der Folie ist auf der Grenzfläche des Folienkörpers die Vielzahl von Vertiefungen und/oder Vorsprüngen als Riblet-Oberflächenstruktur, Rippchen-Oberflächenstruktur und/oder Haifischhaut-Oberflächenstruktur ausgebildet. Damit weist die Folie bei tiefen Temperaturen, insbesondere bei Temperaturen zwischen 213 Kelvin und 243 Kelvin (aufgrund der "Schrumpfung" der mindestens einen Füllmasse) eine Riblet-Oberflächenstruktur, Rippchen-Oberflächenstruktur und/oder Haifischhaut-Oberflächenstruktur an ihrer Außenoberfläche auf. Der mit der Folie bestückte Körper hat deshalb bei tiefen Temperaturen einen reduzierten Luftwiderstand.

Die vorausgehend beschriebenen Vorteile sind auch bei einem Außenhüllenteil für ein Fahrzeug mit einem Hüllenkörperteil, welches an einem Fahrzeuggerüst des Fahrzeugs befestigbar ist, und einer entsprechenden Folie, wobei zumindest eine Teilfläche des Hüllenkörperteils so mit der Kontaktfläche des Folienkörpers der Folie abdeckt ist, dass eine Luftströmungsfläche des Außenhüllenteils zumindest teilweise aus der mindestens einen Füllmasse der Folie gebildet ist, gewährleistet. Die an dem Außenhüllenteil befestigte Folie kann jedes Merkmal der zuvor erläuterten Ausführungsformen der Folie aufweisen.

Die oben beschriebenen Vorteile liegen auch vor bei einem Außenhüllenteil für ein Fahrzeug mit einem Hüllenkörperteil, welches an einem Fahrzeuggerüst des Fahrzeugs befestigbar ist und an einer zu einer Luftströmungsfläche des Außenhüllenteils ausgerichteten oder die Luftströmungsfläche des Außenhüllenteils zumindest teilweise bildenden Grenzfläche eine Vielzahl von Vertiefungen und/oder Vorsprüngen aus mindestens einem Material mit mindestens einem ersten thermischen Ausdehnungskoeffizienten aufweist, wobei die Vertiefungen und/oder Zwischenräume zwischen benachbarten Vorsprüngen zumindest teilweise so mit mindestens einer Füllmasse gefüllt sind, dass die Luftströmungsfläche des Außenhüllenteils zumindest teilweise aus der mindestens einen Füllmasse gebildet ist, wobei die mindestens eine Füllmasse mindestens einen zweiten thermischen Ausdehnungskoeffizienten aufweist, welcher zumindest zwischen 243 Kelvin und 273 Kelvin größer als der mindestens eine erste thermische Ausdehnungskoeffizient ist. Es wird ausdrücklich darauf hingewiesen, dass das Außenhüllenteil entsprechend zu den oben beschriebenen Ausführungsformen der Folie weiterbildbar ist.

Beispielsweise kann das Außenhüllenteil ein Flugzeughüllenteil sein. Eine Ausbildbarkeit des Außenhüllenteils ist jedoch nicht auf dessen Nutzung für ein Flugzeug beschränkt.

Auch ein Propeller für eine Windkraftanlage mit einem Propellerteil und einer Folie gemäß den zuvor beschriebenen Ausführungsformen, wobei zumindest eine Teilfläche des Propellerteils so mit der Kontaktfläche des Folienkörpers der Folie abdeckt ist, dass eine Luftströmungsfläche des Propellers zumindest teilweise aus der mindestens einen Füllmasse der Folie gebildet ist, bewirkt die genannten Vorteile. Jede der oben beschriebenen Ausführungsformen der Folie kann für den Propeller eingesetzt werden.

Zusätzlich sind die oben genannten Vorteile auch bewirkt bei einem Propeller für eine Windkraftanlage mit einem Propellerteil, welches an einer zu einer Luftströmungsfläche des Propellers ausgerichteten oder die Luftströmungsfläche des Propellers zumindest teilweise bildenden Grenzfläche eine Vielzahl von Vertiefungen und/oder Vorsprüngen aus mindestens einem Material mit mindestens einem ersten thermischen Ausdehnungskoeffizienten aufweist, wobei die Vertiefungen und/oder Zwischenräume zwischen benachbarten Vorsprüngen zumindest teilweise so mit mindestens einer Füllmasse gefüllt sind, dass die Luftströmungsfläche des Propellers zumindest teilweise aus der mindestens einen Füllmasse gebildet ist, wobei die mindestens eine Füllmasse mindestens einen zweiten thermischen Ausdehnungskoeffizienten aufweist, welcher zumindest zwischen 243 Kelvin und 273 Kelvin größer als der mindestens eine erste thermische Ausdehnungskoeffizient ist. Es wird ausdrücklich darauf hingewiesen, dass der Propeller gemäß den oben beschriebenen Ausführungsformen der Folie weiterbildbar ist.

Auch ein Verfahren zum Ausbilden einer Luftströmungsfläche an einem Körper schafft die oben genannten Vorteile durch Befestigen einer der oben beschriebenen Ausführungsformen der Folie an zumindest einer Teilfläche des Körpers so, dass zumindest die Teilfläche des Körpers mit der Kontaktfläche des Folienkörpers der Folie abgedeckt wird, wodurch die Luftströmungsfläche zumindest teilweise aus der mindestens einen Füllmasse der Folie gebildet wird. Alle oben beschriebenen Ausführungsformen der Folie können zum Ausführen des Verfahrens zum Ausbilden einer Luftströmungsfläche an einem Körper eingesetzt werden.

Des Weiteren werden die oben beschriebenen Vorteile auch bewirkt durch ein Ausführen eines Verfahrens zum Ausbilden einer Luftströmungsfläche an einem Körper durch Bilden einer Vielzahl von Vertiefungen und/oder Vorsprüngen aus mindestens einem Material mit mindestens einem ersten thermischen Ausdehnungskoeffizienten an zumindest einer Teilfläche des Körpers, und Füllen der Vielzahl von Vertiefungen und/oder einer Vielzahl von Zwischenräumen zwischen benachbarten Vorsprüngen zumindest teilweise so mit mindestens einer Füllmasse, dass die Luftströmungsfläche zumindest teilweise aus der mindestens einen Füllmasse gebildet wird, wobei die mindestens eine Füllmasse mindestens einen zweiten thermischen Ausdehnungskoeffizienten aufweist, welcher zumindest zwischen 243 Kelvin und 273 Kelvin größer als der mindestens eine erste thermische Ausdehnungskoeffizient ist. Es wird ausdrücklich darauf hingewiesen, dass das hier beschriebene Verfahren gemäß den zuvor beschriebenen Ausführungsformen der Folie weiterbildbar ist.

Gemäß einer bevorzugten Weiterbildung des Verfahrens wird die Vielzahl von Vorsprüngen als Punktmuster oder eine strukturierte Schicht mit der Vielzahl von Vertiefungen und/oder Vorsprüngen aus dem mindestens einen Material mit dem mindestens einen ersten thermischen Ausdehnungskoeffizienten auf zumindest die Teilfläche des Körpers gedruckt. Somit kann ein vergleichsweise kostengünstiges und relativ schnell ausführbares Druckverfahren zum Bilden der Vielzahl von Vertiefungen und/oder Vorsprüngen an zumindest der Teilfläche des Körpers genutzt werden.

Vorzugsweise wird als Körper ein Flugzeughüllenteil mit der Luftströmungsfläche ausgebildet. Eine Ausführbarkeit des Verfahrens ist jedoch nicht auf ein derartiges Beispiel für den Körper beschränkt.

Die Erfindung wird im Folgenden anhand von Ausführungsbeispielen unter Bezugnahme auf die beiliegenden Figuren der Zeichnung näher erläutert.

Von den Figuren zeigen:
- Fig. 1a bis 1c: schematische Teildarstellungen einer Ausführungsform des Außenhüllenteils für ein Fahrzeug bei unterschiedlichen Temperaturen;
- Fig. 2: eine schematische Darstellung einer Folie zum Erläutern einer ersten Ausführungsform des Verfahrens zum Ausbilden einer Luftströmungsfläche an einem Körper; und
- Fig. 3: ein Flussdiagramm zum Erläutern einer zweiten Ausführungsform des Verfahrens zum Ausbilden einer Luftströmungsfläche an einem Körper.

In den Figuren bezeichnen dieselben Bezugszeichen gleiche oder funktionsgleiche Komponenten, soweit nichts Gegenteiliges angegeben ist.

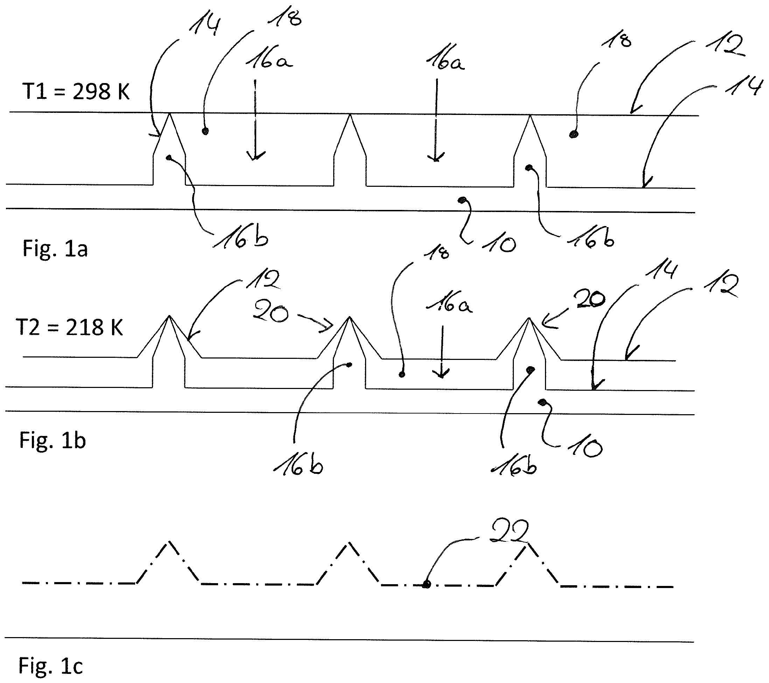

Fig. 1a bis 1c zeigen schematische Teildarstellungen einer Ausführungsform des Außenhüllenteils für ein Fahrzeug bei unterschiedlichen Temperaturen.

Das in Fig. 1a bis 1c schematisch teilweise dargestellte Außenhüllenteil umfasst ein Hüllenkörperteil 10, welches an einem (nicht skizzierten) Fahrzeuggerüst des jeweiligen Fahrzeugs befestigbar ist. Vorzugsweise ist das Hüllenkörperteil 10 an einem Fahrzeuggerüst eines Kraftfahrzeugs befestigbar. Unter dem Kraftfahrzeug können ein Automobil, ein Motorrad, ein Luftfahrzeug, wie z.B. ein Flugzeug und ein Hubschrauber, ein Raumfahrzeug, eine Rakete, ein Wasserfahrzeug, beispielsweise ein Schiff, ein Boot und ein U-Boot, ein Luftkissenfahrzeug und eine Bahn (insbesondere eine Magnetschwebebahn) verstanden werden. In der Ausführungsform der Fig. 1a bis 1b ist das Außenhüllenteil ein Flugzeughüllenteil, so dass das Hüllenkörperteil 10 an einem Flugzeuggerüst als Fahrzeuggerüst befestigbar ist.

Das Hüllenkörperteil 10 ist vorzugsweise aus mindestens einem vergleichsweise leichten Werkstoff, wie beispielsweise mindestens einem Polymer, mindestens einem Metall, mindestens einem Kohlenstoffverbundwerkstoff (carbonfaserverstärkter Kunststoff, CFK) und/oder mindestens einem Glasfaserverbundwerkstoff (GFK), gebildet. Der mindestens eine Polymer kann z.B. Polyphenylensulfid (PPS), Polyetheretherketon (PEEK) und/oder mindestens ein Epoxidharz sein. Als das mindestens eine Metall können Aluminium, Titan, Stahl und/oder Legierungen davon verwendet sein. Es wird jedoch darauf hingewiesen, dass eine Ausbildbarkeit des Hüllenkörperteils 10 nicht auf einen bestimmten Werkstoff limitiert ist.

An einer zu einer Luftströmungsfläche 12 des Außenhüllenteils ausgerichteten oder die Luftströmungsfläche 12 des Außenhüllenteils zumindest teilweise bildenden Grenzfläche 14 weist das Hüllenkörperteil 10 eine Vielzahl von Vertiefungen 16a und/oder Vorsprüngen/Erhebungen 16b aus mindestens einem Material mit mindestens einem ersten thermischen Ausdehnungskoeffizienten auf. Beispielsweise können die Vorsprünge/Erhebungen 16b aus dem mindestens einen Material mit dem mindestens einen ersten thermischen Ausdehnungskoeffizienten auf der (z.B. aus mindestens einem anderen Material gebildeten) Grenzfläche 14 aufgetragen sein. Ebenso können jedoch auch die Vertiefungen 16a in die aus dem mindestens einen Material mit dem mindestens einen ersten thermischen Ausdehnungskoeffizienten geformte Grenzfläche 14 hinein strukturiert sein.

Das mindestens eine Material mit dem mindestens einen ersten thermischen Ausdehnungskoeffizienten können beispielsweise Aluminium (Längenausdehnungskoeffizient 23•10⁻⁶K⁻¹), Titan (Längenausdehnungskoeffizient 9•10⁻⁶K⁻¹), Stahl (Längenausdehnungskoeffizient 12•10⁻⁶K⁻¹), Polyurethan (Längenausdehnungskoeffizient 20•10⁻⁶K⁻¹ bis 40•10⁻⁶K⁻¹), Epoxidharz (Längenausdehnungskoeffizient 20•10⁻⁶K⁻¹ bis 40•10⁻⁶K⁻¹) und/oder Polyetheretherketon (PEEK, Längenausdehnungskoeffizient 50•10⁻⁶K⁻¹) sein. Die hier aufgezählten Materialien sind jedoch nur beispielhaft zu interpretieren.

In der Ausführungsform der Fig. 1a bis 1c bilden die Vertiefungen 16a und/oder Vorsprünge 16b beispielhaft ein sägezahnförmige Oberflächenstruktur. Insbesondere ist die Vielzahl von Vertiefungen 16a und/oder Vorsprüngen 16b auf der Grenzfläche 14 des Hüllenkörperteils 10 als Riblet-Oberflächenstruktur, Rippchen-Oberflächenstruktur und/oder als Haifischhaut-Oberflächenstruktur ausgebildet. Es wird jedoch darauf hingewiesen, dass die in Fig. 1a bis 1c dargestellte Form der Vertiefungen 16a und/oder Vorsprünge 16b nur beispielhaft zu interpretieren ist.

Zumindest teilweise sind die Vertiefungen 16a und/oder Zwischenräume zwischen benachbarten Vorsprüngen 16b mit mindestens einer Füllmasse 18 gefüllt. Die Luftströmungsfläche 12 des Außenhüllenteils ist zumindest teilweise aus der mindestens einen Füllmasse 18 gebildet. Unter der Luftströmungsfläche 12 ist eine Fläche des Außenhüllenteils zu verstehen, welche auch nach einem Befestigen des Hüllenkörperteils 10 an dem Fahrzeuggerüst des jeweiligen Fahrzeugs eine das Fahrzeug umgebende Luft kontaktiert. Vorzugsweise strömt bei einer Bewegung des Fahrzeugs mit dem daran befestigten Außenhüllenteil Luft entlang der Luftströmungsfläche 12.

Die mindestens eine Füllmasse 18 schützt die auf der Grenzfläche 14 ausgebildeten Vertiefungen 16a und/oder Vorsprünge 16b vor Beschädigungen, wie beispielsweise einer Regenerosion, einer Sanderosion oder einem Steinschlag. Durch die Verwendung der mindestens einen Füllmasse 18 wird somit eine mechanische Beständigkeit der Vertiefungen 16a und/oder Vorsprünge 16b verbessert. Damit muss auch keine "Abstumpfung" der aus den Vertiefungen 16a und/oder Vorsprüngen 16b gebildeten Oberflächenstruktur befürchtet werden, selbst wenn das mindestens eine Material der Vertiefungen 16a und/oder Vorsprünge 16b (mit dem mindestens einen ersten thermischen Ausdehnungskoeffizienten) gegenüber einer Regenerosion, einer Sanderosion oder einem Steinschlag relativ empfindlich ist.

Die mindestens eine Füllmasse 18 weist mindestens einen zweiten thermischen Ausdehnungskoeffizienten auf, welcher zumindest zwischen 243 Kelvin (-30°Celsius) und 273 Kelvin (0°Celsius) größer als der mindestens eine erste thermische Ausdehnungskoeffizient des mindestens einen Materials der Vertiefungen 16a und/oder Vorsprünge 16b ist. Insbesondere kann der mindestens eine zweite thermische Ausdehnungskoeffizient der mindestens einen Füllmasse 18 auch zwischen 223 Kelvin (-50°Celsius) und 293 Kelvin (20°Celsius), speziell zwischen 203 Kelvin (-70°Celsius) und 313 Kelvin (40°Celsius), größer als der mindestens eine erste thermische Ausdehnungskoeffizient des mindestens einen Materials der Vertiefungen 16a und/oder Vorsprünge 16b sein. (Unter dem mindestens einen ersten thermischen Ausdehnungskoeffizienten und dem mindestens einen zweiten thermischen Ausdehnungskoeffizienten sind vorzugsweise Raumausdehnungskoeffizienten zu verstehen.)

Als die mindestens eine Füllmasse 18 mit dem mindestens einen zweiten thermischen Ausdehnungskoeffizienten können z.B. Polysulfide (Längenausdehnungskoeffizient 60•10⁻⁶K⁻¹ bis 80•10⁻⁶K⁻¹) und/oder Polythioether (Längenausdehnungskoeffizient 60•10⁻⁶K⁻¹ bis 80•10⁻⁶K⁻¹) verwendet sein. Die hier genannten Beispiele für die mindestens eine Füllmasse sind jedoch nicht abschließend.

Die Vorteile des oben beschriebenen Außenhüllenteils werden nachfolgend mit Bezug auf die Fig. 1a bis 1c erläutert:
Fig. 1a zeigt das Außenhüllenteil bei einer ersten Temperatur T1 von 298 K (298 Kelvin/25°Celsius). Demgegenüber ist das Außenhüllenteil in Fig. 1b bei einer zweiten Temperatur T2 von 218 K (218 Kelvin/-55°Celsius) wiedergegeben. Erkennbar ist, dass eine mittlere Rauheit und eine quadratische Rauheit der zumindest teilweise aus dem mindestens einen Füllmaterial 18 gebildeten Luftströmungsfläche 12 bei 298 K (Fig. 1a) größer sind als bei 218 K (Fig. 1b). Bezügliche einer Definition der mittleren Rauheit und der quadratischen Rauheit wird auf die Literatur (z.B. https://de.wikipedia.org/wiki/Rauheit) verwiesen.

Bei einem Start, bei einer Landung und während einer Wartung eines mit dem Außenhüllenteil der Fig. 1a bis 1c ausgestatteten Flugzeugs liegt eine Außentemperatur normalerweise um die erste Temperatur T1. Aufgrund der vergleichsweise niedrigen mittleren Rauheit und der relativ geringen quadratischen Rauheit der Luftströmungsfläche 12 bei der ersten Temperatur T1 ist ein herkömmliches Risiko eines Anhaftens von (während des Start oder der Landung aufprallenden) Staubpartikeln, Regentropfen, Eisanhaftungen oder Insektenrückständen an der Luftströmungsfläche 12 deutlich reduziert. Des Weiteren erleichtern die vergleichsweise niedrige mittlere Rauheit und die relativ geringe quadratische Rauheit der Luftströmungsfläche 12 bei der ersten Temperatur T1 ein Reinigen der Luftströmungsfläche 12 während einer Wartung (Easy-to-Clean-Effekt).

Beispielhaft ist in der Ausführungsform der Fig. 1a bis 1c die Luftströmungsfläche 12 des Außenhüllenteils bei der ersten Temperatur T1 glatt/eben. Die oben beschriebenen Vorteile können jedoch auch bei einer leicht unebenen Luftströmungsfläche 12 vorliegen.

Während eines Flugs des mit dem Außenhüllenteil der Fig. 1a bis 1c ausgestatteten Flugzeugs steigt das Flugzeug typischerweise auf eine Flughöhe von etwa 35000 Fuß auf. Bei einer derartigen Flughöhe liegt eine Umgebungstemperatur meistens um die zweite Temperatur T2. Während einer Temperaturänderung von der ersten Temperatur T1 zu der zweiten Temperatur T2 schrumpft die mindestens eine Füllmasse 18 stärker als die auf der Grenzfläche 14 ausgebildeten Vertiefungen 16a und/oder Vorsprünge 16b. Deshalb bilden sich auf der Luftströmungsfläche 12 während der Temperaturänderung von der ersten Temperatur T1 zu der zweiten Temperatur T2 "kältebedingte" Oberflächenunebenheiten 20. Man kann die Bildung der "kältebedingten" Oberflächenunebenheiten 20 auch damit umschreiben, dass die Vorsprünge 16b durch das stärkere Schrumpfen der mindestens einen Füllmasse 18 "partiell freigelegt" werden.

Durch eine Form der Vertiefungen 16a und/oder Vorsprünge 16b, den mindestens einen ersten thermischen Ausdehnungskoeffizienten (des mindestens einen Materials der Vertiefungen 16a und/oder Vorsprünge 16b) und den mindestens einen zweiten thermischen Ausdehnungskoeffizienten (des mindestens einen Füllmaterials 18) kann eine Form der "kältebedingten" Oberflächenunebenheiten 20 bei der zweiten Temperatur T2/Flughöhe festgelegt werden. Auf diese Weise kann sichergestellt werden, dass die Luftströmungsfläche 12 bei der zweiten Temperatur T2/Flughöhe aufgrund der "kältebedingten" Oberflächenunebenheiten 20 einen reduzierten Luftwiderstand (bzw. eine reduzierte Luftreibung) für den Flugbetrieb bewirkt. Die "kältebedingten" Oberflächenunebenheiten 20 können beispielsweise einer Riblet-Oberflächenstruktur, einer Rippchen-Oberflächenstruktur und/oder einer Haifischhaut-Oberflächenstruktur entsprechen.

Fig. 1c gibt eine optimierte Riblet-Oberflächenstruktur mittels einer gestrichelten Linie 22 wieder, für welche eine Reibungsminderung von 2 % bei einem Flugversuch mit einem Großflugzeug, dessen Oberfläche zu 70 % die optimierte Oberflächenstruktur aufwies, nachgewiesen werden konnte. Dies führte zu einer Treibstoffeinsparung von 1,5 %. Erkennbar ist, dass die "kältebedingten" Oberflächenunebenheiten 20 der Fig. 1b im Wesentlichen der gestrichelten Linie 22 entsprechen, obwohl die bei der ersten Temperatur T1 vorliegende Form der Vorsprünge 16 und die bei der ersten Temperatur T1 glatte Form der Luftströmungsfläche 12 signifikant von der gestrichelten Linie 22 abweichen.

Die mindestens eine Füllmasse 18 schützt deshalb die Oberflächenstruktur der Grenzfläche 14 nicht nur (vor allem auf einer Start- und Landebahn) vor einer Regenerosion, einer Sanderosion oder einem Steinschlag, sondern sie bietet auch einen Schutz der Luftströmungsfläche 12 vor Fremdpartikel-Anlagerungen oder Verschmutzungen und erleichtert ein Reinigen der Luftströmungsfläche 12 (Easy-to-Clean-Effekt). Gleichzeitig ist gewährleistet, dass die Luftströmungsfläche 12 während eines Flugbetriebs in Flughöhe einen reduzierten Luftwiderstand (bzw. eine reduzierte Luftreibung) bewirkt.

Zum Herstellen des Außenhüllenteils der Fig. 1a bis 1c kann jedes der nachfolgend beschriebenen Verfahren zum Ausbilden einer Luftströmungsfläche an einem Körper ausgeführt werden.

Es wird auch darauf hingewiesen, dass die Vorteile des oben beschriebenen Außenhüllenteils auch bei einem entsprechenden Propeller für eine Windkraftanlage vorliegen.

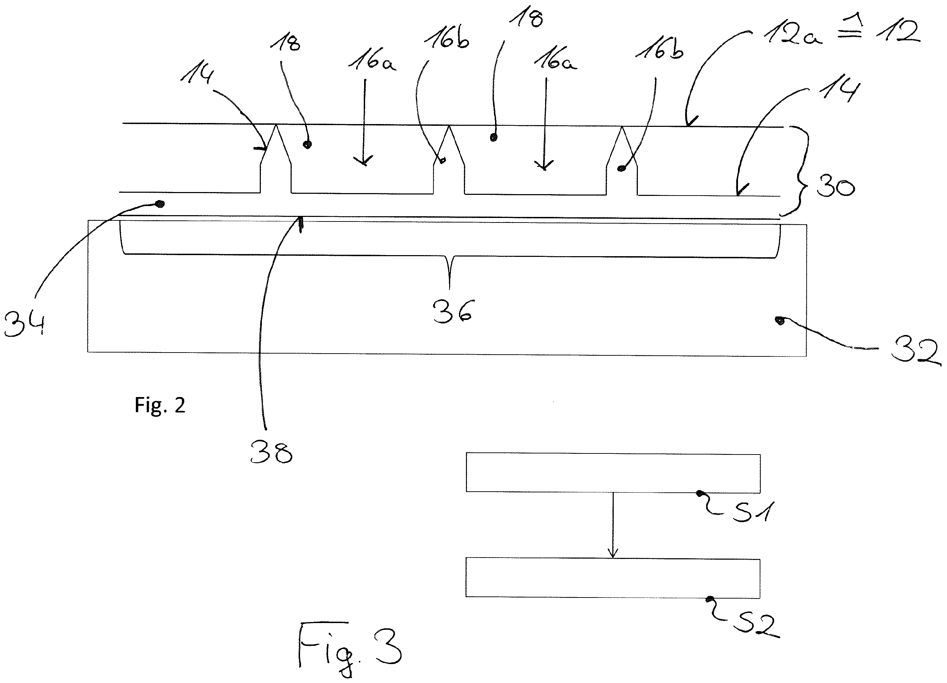

Fig. 2 zeigt eine schematische Darstellung einer Folie zum Erläutern einer ersten Ausführungsform des Verfahrens zum Ausbilden einer Luftströmungsfläche an einem Körper.

Die in Fig. 2 schematisch wiedergegebene Folie 30 ist zum Ausbilden einer Luftströmungsfläche an einem Körper 32 geeignet. Der Körper 32 kann beispielsweise ein Fahrzeug/Kraftfahrzeug, wie ein Automobil, ein Motorrad, ein Luftfahrzeug (z.B. ein Flugzeug oder ein Hubschrauber), ein Raumfahrzeug, eine Rakete, ein Wasserfahrzeug (beispielsweise ein Schiff, ein Boot oder ein U-Boot), ein Luftkissenfahrzeug oder eine Bahn (insbesondere eine Magnetschwebebahn) sein.

Die Folie 30 weist einen Folienkörper 34 auf, welcher an zumindest einer Teilfläche 36 des Körpers 32 so befestigbar ist, dass eine Kontaktfläche 38 des Folienkörpers 34 zumindest die Teilfläche 36 des Körpers 32 abdeckt. Eine von der Kontaktfläche 38 weg gerichtete Grenzfläche 16 des Folienkörpers 34 weist eine Vielzahl von Vertiefungen 16a und/oder Vorsprüngen/Erhebungen 16b aus mindestens einem Material mit mindestens einem ersten thermischen Ausdehnungskoeffizienten auf. Die Vertiefungen 16a und/oder Zwischenräume zwischen benachbarten Vorsprüngen 16b sind zumindest teilweise mit mindestens einer Füllmasse 18 gefüllt, wobei die mindestens eine Füllmasse 18 mindestens einen zweiten thermischen Ausdehnungskoeffizienten aufweist, welcher zumindest zwischen 243 Kelvin und 273 Kelvin größer als der mindestens eine erste thermische Ausdehnungskoeffizient ist. Damit ist auch bei der Folie 30 gewährleistet, dass eine mittlere Rauheit und/oder eine quadratische Rauheit einer zumindest teilweise aus dem mindestens einen Füllmaterial 18 gebildeten Außenoberfläche 12a der Folie 30 bei 243 Kelvin größer als bei 273 Kelvin sind. Lediglich beispielhaft ist die Außenoberfläche 12a der Folie 30 der Fig. 2 bei 298 Kelvin (völlig) glatt/eben. (Beispiele für das mindestens eine Material mit mindestens einem ersten thermischen Ausdehnungskoeffizienten und die mindestens eine Füllmasse 18 mit dem mindestens einen zweiten thermischen Ausdehnungskoeffizienten sind oben schon genannt.)

Zum Ausführen des Verfahrens zum Ausbilden einer Luftströmungsfläche 12 an dem Körper 32 wird die Folie 30 an zumindest einer Teilfläche 36 des Körpers 32 so befestigt, dass zumindest die Teilfläche 36 des Körpers 32 mit der Kontaktfläche 38 des Folienkörpers 34 der Folie 30 abdeckt wird, wodurch die Luftströmungsfläche 12 (als Außenoberfläche 12a der Folie 30) zumindest teilweise aus der mindestens einen Füllmasse 18 der Folie 30 gebildet wird. Sinkt später die Temperatur in einer Umgebung des Körpers 32, so treten die oben beschriebenen "kältebedingten" Oberflächenunebenheiten an der Luftströmungsfläche 12 auf, wodurch während einer Bewegung des Körpers dessen Luftwiderstand reduziert wird.

Der Folienkörpers 34 der Folie 30 kann beispielsweise mittels eines auf die Kontaktfläche 38 (frisch) aufgebrachten oder bereits vorliegenden Klebstoffs an zumindest der Teilfläche 36 des Körpers 32 festgeklebt werden. Mittels einer geeigneten Wahl des Klebstoffs kann eine Ablösung der Folie 30 (selbst während einer Fahrt/eines Flugs des damit beklebten Körpers 32) verhindert werden.

Auch bei der Folie 30 kann die Vielzahl von Vertiefungen 16a und/oder Vorsprüngen 16b auf der Grenzfläche 14 des Folienkörpers 34 als Riblet-Oberflächenstruktur, Rippchen-Oberflächenstruktur und/oder als Haifischhaut-Oberflächenstruktur ausgebildet sein. Ebenso können durch eine Form der Vertiefungen 16a und/oder Vorsprünge 16b, den mindestens einen ersten thermischen Ausdehnungskoeffizienten (des mindestens einen Materials der Vertiefungen 16a und/oder Vorsprünge 16b) und den mindestens einen zweiten thermischen Ausdehnungskoeffizienten (des mindestens einen Füllmaterials 18) die "kältebedingte" Oberflächenunebenheiten in Form einer Riblet-Oberflächenstruktur, einer Rippchen-Oberflächenstruktur und/oder einer Haifischhaut-Oberflächenstruktur festgelegt werden.

Die mittels des hier beschriebenen Verfahrens gebildete Luftströmungsfläche 12 weist somit alle oben beschriebenen Vorteile auf.

Fig. 3 zeigt ein Flussdiagramm zum Erläutern einer zweiten Ausführungsform des Verfahrens zum Ausbilden einer Luftströmungsfläche an einem Körper.

In einem Verfahrensschritt S1 wird eine Vielzahl von Vertiefungen und/oder Vorsprüngen/Erhebungen aus mindestens einem Material mit mindestens einem ersten thermischen Ausdehnungskoeffizienten an zumindest einer Teilfläche des Körpers gebildet. Beispielsweise kann die Vielzahl von Vorsprüngen als Punktmuster auf zumindest die Teilfläche des Körpers gedruckt werden. Ebenso kann eine strukturierte Schicht mit der Vielzahl von Vertiefungen und/oder Vorsprüngen auf zumindest die Teilfläche des Körpers gedruckt werden. Als das mindestens eine Material mit dem mindestens einen ersten thermischen Ausdehnungskoeffizienten zum Drucken der Vertiefungen und/oder Vorsprünge kann beispielsweise ein Lack (Riblet-Lack) verwendet werden. Eine Ausführbarkeit des Verfahrensschritts S1 ist jedoch nicht auf ein Druckverfahren beschränkt.

In einem weiteren Verfahrensschritt S2 wird die Vielzahl von Vertiefungen und/oder eine Vielzahl von Zwischenräumen zwischen benachbarten Vorsprüngen zumindest teilweise mit mindestens einer Füllmasse gefüllt, wobei die mindestens eine Füllmasse mindestens einen zweiten thermischen Ausdehnungskoeffizienten aufweist, welcher zumindest zwischen 243 Kelvin und 273 Kelvin größer als der mindestens eine erste thermische Ausdehnungskoeffizient ist. Das zumindest teilweise Befüllen der Vielzahl von Vertiefungen und/oder der Vielzahl von Zwischenräumen mit der mindestens einen Füllmasse geschieht derart, dass die Luftströmungsfläche zumindest teilweise aus der mindestens einen Füllmasse gebildet wird.

Auch ein Ausführen des Verfahrens der Fig. 3 schafft die oben schon erläuterten Vorteile. Bezüglich von Beispielen für das mindestens eine Material mit mindestens einem ersten thermischen Ausdehnungskoeffizienten und die mindestens eine Füllmasse 18 mit dem mindestens einen zweiten thermischen Ausdehnungskoeffizienten wird auf die oberen Aufzählungen verwiesen.

Für den Körper können alle oben aufgezählten Fahrzeugtypen/Kraftfahrzeugtypen oder ein Propeller einer Windkraftanlage eingesetzt werden. Insbesondere kann als der Körper ein Flugzeughüllenteil mit der Luftströmungsfläche ausgebildet werden. Da eine Degradation/Beschädigung der Vertiefungen und/oder Vorsprünge selbst während eines Starts oder einer Landung eines mit dem Flugzeughüllenteil bestückten Flugzeugs aufgrund der mindestens einen Füllmasse verlässlich unterbunden ist, kann eine Vielzahl von verschiedenen Lacken (Riblet-Lacken) zum Drucken in dem Verfahrensschritt S1 verwendet werden, ohne dass eine Verminderung oder Aufhebung einer reibungsvermindernden Wirkung der Luftströmungsfläche an dem Flugzeughüllenteil zu befürchten ist.

### Bezugszeichenliste

- 10: Hüllenkörperteil
- 12: Luftströmungsfläche
- 12a: Außenoberfläche
- 14: Grenzfläche
- 16a: Vertiefungen
- 16b: Vorsprünge/Erhebungen
- 18: Füllmasse
- 20: Oberflächenunebenheiten
- 22: Linie
- 30: Folie
- 32: Körper
- 34: Folienkörper
- 36: Teilfläche
- 38: Kontaktfläche
- S1: Verfahrensschritt
- S2: Verfahrensschritt

## Patentansprüche

1. Folie (30) zum Ausbilden einer Luftströmungsfläche (12) an einem Körper (32) mit:
einem Folienkörper (34), welcher an zumindest einer Teilfläche (36) des Körpers (32) so befestigbar ist, dass eine Kontaktfläche (38) des Folienkörpers (34) zumindest die Teilfläche (36) des Körpers (32) abdeckt,
wobei eine von der Kontaktfläche (38) weg gerichtete Grenzfläche (14) des Folienkörpers (34) eine Vielzahl von Vertiefungen (16a) und/oder Vorsprüngen (16b) aus mindestens einem Material mit mindestens einem ersten thermischen Ausdehnungskoeffizienten aufweist,
**gekennzeichnet durch**
eine zumindest teilweise aus mindestens einer Füllmasse (18), mit welcher die Vertiefungen (16a) und/oder Zwischenräume zwischen benachbarten Vorsprüngen (16b) zumindest teilweise gefüllt sind, gebildeten Außenoberfläche (12a) der Folie (30), so dass, sofern zumindest die Teilfläche (36) des Körpers (32) mit der Kontaktfläche (38) des Folienkörpers (34) abgedeckt ist, die Luftströmungsfläche (12) des Körpers (32) zumindest teilweise aus der mindestens einen Füllmasse (18) gebildet ist,
wobei die mindestens eine Füllmasse (18) mindestens einen zweiten thermischen Ausdehnungskoeffizienten aufweist, welcher zumindest zwischen 243 Kelvin und 273 Kelvin größer als der mindestens eine erste thermische Ausdehnungskoeffizient ist.

2. Folie (30) nach Anspruch 1, wobei eine mittlere Rauheit und/oder eine quadratische Rauheit der zumindest teilweise aus der mindestens einen Füllmasse (18) gebildeten Außenoberfläche (12a) der Folie (30) bei 243 Kelvin größer als bei 273 Kelvin sind.

3. Folie (30) nach Anspruch 2, wobei die Außenoberfläche (12a) der Folie (30) bei 298 Kelvin glatt ist.

4. Folie (30) nach einem der vorhergehenden Ansprüche, wobei auf der Grenzfläche (14) des Folienkörpers (34) die Vielzahl von Vertiefungen (16a) und/oder Vorsprüngen (16b) als Riblet-Oberflächenstruktur, Rippchen-Oberflächenstruktur und/oder als Haifischhaut-Oberflächenstruktur ausgebildet ist.

5. Außenhüllenteil für ein Fahrzeug mit:
einem Hüllenkörperteil (10), welches an einem Fahrzeuggerüst des Fahrzeugs befestigbar ist; und
einer Folie (30) nach einem der vorhergehenden Ansprüche;
wobei zumindest eine Teilfläche (36) des Hüllenkörperteils (10) so mit der Kontaktfläche (38) des Folienkörpers (32) der Folie (30) abdeckt ist, dass die Luftströmungsfläche (12) des Außenhüllenteils zumindest teilweise aus der mindestens einen Füllmasse (18) der Folie (30) gebildet ist.

6. Außenhüllenteil für ein Fahrzeug mit:
einem Hüllenkörperteil (10), welches an einem Fahrzeuggerüst des Fahrzeugs befestigbar ist und an einer zu einer Luftströmungsfläche (12) des Außenhüllenteils ausgerichteten oder die Luftströmungsfläche (12) des Außenhüllenteils zumindest teilweise bildenden Grenzfläche (14) eine Vielzahl von Vertiefungen (16a) und/oder Vorsprüngen (16b) aus mindestens einem Material mit mindestens einem ersten thermischen Ausdehnungskoeffizienten aufweist;
**dadurch gekennzeichnet, dass**
die Vertiefungen (16a) und/oder Zwischenräume zwischen benachbarten Vorsprüngen (16b) zumindest teilweise so mit mindestens einer Füllmasse (18) gefüllt sind, dass die Luftströmungsfläche (12) des Außenhüllenteils zumindest teilweise aus der mindestens einen Füllmasse (18) gebildet ist, wobei die mindestens eine Füllmasse (18) mindestens einen zweiten thermischen Ausdehnungskoeffizienten aufweist, welcher zumindest zwischen 243 Kelvin und 273 Kelvin größer als der mindestens eine erste thermische Ausdehnungskoeffizient ist.

7. Außenhüllenteil nach Anspruch 6, wobei auf der Grenzfläche (14) des Hüllenkörperteils (10) die Vielzahl von Vertiefungen (16a) und/oder Vorsprüngen (16b) als Riblet-Oberflächenstruktur, Rippchen-Oberflächenstruktur und/oder als Haifischhaut-Oberflächenstruktur ausgebildet ist.

8. Außenhüllenteil nach Anspruch 6 oder 7, wobei eine mittlere Rauheit und/oder eine quadratische Rauheit der zumindest teilweise aus der mindestens einen Füllmasse (18) gebildeten Luftströmungsfläche (12) bei 243 Kelvin größer als bei 273 Kelvin sind.

9. Außenhüllenteil nach Anspruch 8, wobei die Luftströmungsfläche (12) bei 298 Kelvin glatt ist.

10. Außenhüllenteil nach einem der Ansprüche 5 bis 9, wobei das Außenhüllenteil ein Flugzeughüllenteil ist.

11. Propeller für eine Windkraftanlage mit:
einem Propellerteil, welches an einer zu einer Luftströmungsfläche (12) des Propellers ausgerichteten oder die Luftströmungsfläche (12) des Propellers zumindest teilweise bildenden Grenzfläche (14) eine Vielzahl von Vertiefungen (16a) und/oder Vorsprüngen (16b) aus mindestens einem Material mit mindestens einem ersten thermischen Ausdehnungskoeffizienten aufweist;
wobei die Vertiefungen (16a) und/oder Zwischenräume zwischen benachbarten Vorsprüngen (16b) zumindest teilweise so mit mindestens einer Füllmasse (18) gefüllt sind, dass die Luftströmungsfläche (12) des Propellers zumindest teilweise aus der mindestens einen Füllmasse (18) gebildet ist, wobei die mindestens eine Füllmasse (18) mindestens einen zweiten thermischen Ausdehnungskoeffizienten aufweist, welcher zumindest zwischen 243 Kelvin und 273 Kelvin größer als der mindestens eine erste thermische Ausdehnungskoeffizient ist.

12. Verfahren zum Ausbilden einer Luftströmungsfläche (12) an einem Körper (32) mit den Schritten:
Befestigen der Folie (30) nach einem der Ansprüche 1 bis 4 an zumindest einer Teilfläche (36) des Körpers (32) so, dass zumindest die Teilfläche (36) des Körpers (32) mit der Kontaktfläche (38) des Folienkörpers (34) der Folie (30) abdeckt wird, wodurch die Luftströmungsfläche (12) zumindest teilweise aus der mindestens einen Füllmasse (18) der Folie (30) gebildet wird.

13. Verfahren zum Ausbilden einer Luftströmungsfläche (12) an einem Körper (32) mit den Schritten:
Bilden einer Vielzahl von Vertiefungen (16a) und/oder Vorsprüngen (16b) aus mindestens einem Material mit mindestens einem ersten thermischen Ausdehnungskoeffizienten an zumindest einer Teilfläche (36) des Körpers (32) (S1); und
Füllen der Vielzahl von Vertiefungen (16a) und/oder einer Vielzahl von Zwischenräume zwischen benachbarten Vorsprüngen (16b) zumindest teilweise so mit mindestens einer Füllmasse (18), dass die Luftströmungsfläche (12) zumindest teilweise aus der mindestens einen Füllmasse (18) gebildet wird, wobei die mindestens eine Füllmasse (18) mindestens einen zweiten thermischen Ausdehnungskoeffizienten aufweist, welcher zumindest zwischen 243 Kelvin und 273 Kelvin größer als der mindestens eine erste thermische Ausdehnungskoeffizient ist (S2).

14. Verfahren nach Anspruch 13, wobei die Vielzahl von Vorsprüngen als Punktmuster oder eine strukturierte Schicht mit der Vielzahl von Vertiefungen und/oder Vorsprüngen aus dem mindestens einen Material mit dem mindestens einen ersten thermischen Ausdehnungskoeffizienten auf zumindest die Teilfläche des Körpers gedruckt wird.

15. Verfahren nach einem der Ansprüche 12 bis 14, wobei als Körper ein Flugzeughüllenteil mit der Luftströmungsfläche ausgebildet wird.

## Claims

1. Film (30) for forming an air flow surface (12) on a body (32), having:
a film body (34) which is fastenable to at least one surface part (36) of the body (32) such that a contact surface (38) of the film body (34) covers at least the surface part (36) of the body (32),
wherein a boundary surface (14), directed away from the contact surface (38), of the film body (34) has a multiplicity of depressions (16a) and/or projections (16b) composed at least of a material with at least one first coefficient of thermal expansion,
**characterized by**
an outer surface (12a) of the film (30), which outer surface is formed at least partially from at least one further compound (18) with which the depressions (16a) and/or intermediate spaces between adjacent projections (16b) are at least partially filled, such that, if at least the surface part (36) of the body (32) has been covered by the contact surface (38) of the film body (34), the air flow surface (12) of the body (32) is formed at least partially from the at least one filler compound (18),
wherein the at least one filler compound (18) has at least one second coefficient of thermal expansion which is at least between 243 Kelvin and 273 Kelvin higher than the at least one first coefficient of thermal expansion.

2. Film (30) according to Claim 1, wherein an average roughness and/or a root-mean-square roughness of the outer surface (12a), formed at least partially from the at least one filler compound (18), of the film (30) are greater at 243 Kelvin than at 273 Kelvin.

3. Film (30) according to Claim 2, wherein the outer surface (12a) of the film (30) is smooth at 298 Kelvin.

4. Film (30) according to any of the preceding claims, wherein, on the boundary surface (14) of the film body (34), the multiplicity of depressions (16a) and/or projections (16b) is formed as a riblet surface structure, rib surface structure and/or sharkskin surface structure.

5. Exterior shell part for a vehicle having:
a shell body part (10) which is fastenable to a vehicle frame of the vehicle; and
a film (30) according to any of the preceding claims;
wherein at least one surface part (36) of the shell body part (10) by the contact surface (38) of the film body (32) of the film (30) such that the air flow surface (12) of the exterior shell part is formed at least partially from the at least one filler compound (18) of the film (30).

6. Exterior shell part for a vehicle having:
a shell body part (10) which is fastenable to a vehicle frame of the vehicle and, on a boundary surface (14), which is oriented toward an air flow surface (12) of the exterior shell part or at least partially forms the air flow surface (12) of the exterior shell part, has a multiplicity of depressions (16a) and/or projections (16b) composed of at least one material with at least one first coefficient of thermal expansion;
**characterized in that**
the depressions (16a) and/or intermediate spaces between adjacent projections (16b) are at least partially filled with at least one filler compound (18) such that the air flow surface (12) of the exterior shell part is formed at least partially from the at least one filler compound (18), wherein the at least one filler compound (18) has at least one second coefficient of thermal expansion which is at least between 243 Kelvin and 273 Kelvin higher than the at least one first coefficient of thermal expansion.

7. Exterior shell part according to Claim 6, wherein, on the boundary surface (14) of the shell body part (10), the multiplicity of depressions (16a) and/or projections (16b) is formed as a riblet surface structure, rib surface structure and/or sharkskin surface structure.

8. Exterior shell part according to Claim 6 or 7, wherein an average roughness and/or a root-mean-square roughness of the air flow surface (12), formed at least partially from the at least one filler compound (18), are greater at 243 Kelvin than at 273 Kelvin.

9. Exterior shell part according to Claim 8, wherein the air flow surface (12) is smooth at 298 Kelvin.

10. Exterior shell part according to any of Claims 5 to 9, wherein the exterior shell part is an aircraft shell part.

11. Propeller for a wind turbine, having:
a propeller part which, on a boundary surface (14), which is oriented toward an air flow surface (12) of the propeller or at least partially forms the air flow surface (12) of the propeller, has a multiplicity of depressions (16a) and/or projections (16b) composed of at least one material with at least one first coefficient of thermal expansion;
wherein the depressions (16a) and/or intermediate spaces between adjacent projections (16b) are at least partially filled with at least one filler compound (18) such that the air flow surface (12) of the propeller is formed at least partially from the at least one filler compound (18), wherein the at least one filler compound (18) has at least one second coefficient of thermal expansion which is at least between 243 Kelvin and 273 Kelvin higher than the at least one first coefficient of thermal expansion.

12. Method for forming an air flow surface (12) on a body (32), having the steps:
fastening the film (30) according to any of Claims 1 to 4 to at least one surface part (36) of the body (32) such that at least the surface part (36) of the body (32) is covered by the contact surface (38) of the film body (34) of the film (30), whereby the air flow surface (12) is formed at least partially from the at least one filler compound (18) of the film (30) .

13. Method for forming an air flow surface (12) on a body (32), having the steps:
forming a multiplicity of depressions (16a) and/or projections (16b) from at least one material with at least one first coefficient of thermal expansion on at least one surface part (36) of the body (32) (S1); and
filling the multiplicity of depressions (16a) and/or a multiplicity of intermediate spaces between adjacent projections (16b) at least partially with at least one filler compound (18) such that the air flow surface (12) is formed at least partially from the at least one filler compound (18), wherein the at least one filler compound (18) has at least one second coefficient of thermal expansion which is at least between 243 Kelvin and 273 Kelvin higher than the at least one first coefficient of thermal expansion.

14. Method according to Claim 13, wherein the multiplicity of projections is printed as a dot pattern or a structured layer with the multiplicity of depressions and/or projections composed of the at least one material with the at least one first coefficient of thermal expansion onto the surface part of the body.

15. Method according to any of Claims 12 to 14, wherein, as a body, an aircraft shell part is formed with the air flow surface.

## Revendications

1. Film (30) destiné à former une surface d'écoulement d'air (12) au niveau d'un corps (32), comprenant :
un corps de film (34) qui peut être fixé à au moins une surface partielle (36) du corps (32) de telle sorte qu'une surface de contact (38) du corps de film (34) recouvre au moins la surface partielle (36) du corps (32), une surface limite (14) du corps de film (34), orientée à l'opposé de la surface de contact (38), possédant une pluralité de creux (16a) et/ou de parties saillantes (16b) en au moins un matériau ayant au moins un premier coefficient de dilatation thermique,
**caractérisé par**
une surface extérieure (12a) du film (30), formée au moins partiellement d'au moins une masse de remplissage (18) avec laquelle sont au moins partiellement remplis les creux (16a) et/ou les espaces intermédiaires entre des parties saillantes (16b) voisines, de sorte que, sous réserve qu'au moins la surface partielle (36) du corps (32) est recouverte par la surface de contact (38) du corps de film (34), la surface d'écoulement d'air (12) du corps (32) est au moins partiellement formée de l'au moins une masse de remplissage (18),
l'au moins une masse de remplissage (18) possédant au moins un deuxième coefficient de dilatation thermique qui est supérieur d'au moins 243 kelvins à 273 kelvins à l'au moins un premier coefficient de dilatation thermique.

2. Film (30) selon la revendication 1, une rugosité moyenne et/ou une rugosité quadratique de la surface extérieure (12a) du film (30) au moins partiellement formée de l'au moins une masse de remplissage (18) étant plus élevées à 243 kelvins qu'à 273 kelvins.

3. Film (30) selon la revendication 2, la surface extérieure (12a) du film (30) étant lisse à 298 kelvins.

4. Film (30) selon l'une des revendications précédentes, la pluralité de creux (16a) et/ou de parties saillantes (16b) sur la surface limite (14) du corps de film (34) étant réalisés sous la forme d'une structure de surface à riblets, d'une structure de surface côtelée et/ou d'une structure de surface en peau de requin.

5. Partie d'enveloppe externe pour un véhicule, comprenant :
une partie de corps d'enveloppe (10) qui peut être fixée à un cadre de véhicule du véhicule ; et
un film (30) selon l'une des revendications précédentes ; au moins une surface partielle (36) de la partie de corps d'enveloppe (10) étant recouverte par la surface de contact (38) du corps de film (32) du film (30) de telle sorte que la surface d'écoulement d'air (12) de la partie d'enveloppe externe est au moins partiellement formée de l'au moins une masse de remplissage (18) du film (30).

6. Partie d'enveloppe externe pour un véhicule, comprenant :
une partie de corps d'enveloppe (10) qui peut être fixée à un cadre de véhicule du véhicule et qui possède, au niveau d'une surface limite (14) orientée vers une surface d'écoulement d'air (12) de la partie d'enveloppe externe ou formant au moins partiellement la surface d'écoulement d'air (12) de la partie d'enveloppe externe, une pluralité de creux (16a) et/ou de parties saillantes (16b) en au moins un matériau ayant au moins un premier coefficient de dilatation thermique ;
**caractérisée en ce que**
les creux (16a) et/ou les espaces intermédiaires entre des parties saillantes (16b) voisines sont au moins partiellement remplis d'au moins une masse de remplissage (18) de sorte que la surface d'écoulement d'air (12) de la partie d'enveloppe externe est au moins partiellement formée de l'au moins une masse de remplissage (18), l'au moins une masse de remplissage (18) possédant au moins un deuxième coefficient de dilatation thermique qui est supérieur d'au moins 243 kelvins à 273 kelvins à l'au moins un premier coefficient de dilatation thermique.

7. Partie d'enveloppe externe selon la revendication 6, la pluralité de creux (16a) et/ou de parties saillantes (16b) sur la surface limite (14) de la partie de corps d'enveloppe (10) étant réalisés sous la forme d'une structure de surface à riblets, d'une structure de surface côtelée et/ou d'une structure de surface en peau de requin.

8. Partie d'enveloppe externe selon la revendication 6 ou 7, une rugosité moyenne et/ou une rugosité quadratique de la surface d'écoulement d'air (12) au moins partiellement formée de l'au moins une masse de remplissage (18) étant plus élevées à 243 kelvins qu'à 273 kelvins.

9. Partie d'enveloppe externe selon la revendication 8, la surface d'écoulement d'air (12) étant lisse à 298 kelvins.

10. Partie d'enveloppe externe selon l'une des revendications 5 à 9, la partie d'enveloppe externe étant une partie d'enveloppe d'aéronef.

11. Hélice pour un aérogénérateur, comprenant :
une partie d'hélice qui possède, au niveau d'une surface limite (14) orientée vers une surface d'écoulement d'air (12) de l'hélice ou formant au moins partiellement la surface d'écoulement d'air (12) de l'hélice, une pluralité de creux (16a) et/ou de parties saillantes (16b) en au moins un matériau ayant au moins un premier coefficient de dilatation thermique ;
les creux (16a) et/ou les espaces intermédiaires entre des parties saillantes (16b) voisines étant au moins partiellement remplis d'au moins une masse de remplissage (18) de sorte que la surface d'écoulement d'air (12) de l'hélice est au moins partiellement formée de l'au moins une masse de remplissage (18), l'au moins une masse de remplissage (18) possédant au moins un deuxième coefficient de dilatation thermique qui est supérieur d'au moins 243 kelvins à 273 kelvins à l'au moins un premier coefficient de dilatation thermique.

12. Procédé de formation d'une surface d'écoulement d'air (12) sur un corps (32), comprenant les étapes suivantes :
fixation du film (30) selon l'une des revendications 1 à 4 à au moins une surface partielle (36) du corps (32) de telle sorte qu'au moins la surface partielle (36) du corps (32) est recouverte par la surface de contact (38) du corps de film (34) du film (30), moyennant quoi la surface d'écoulement d'air (12) est au moins partiellement formée de l'au moins une masse de remplissage (18) du film (30).

13. Procédé de formation d'une surface d'écoulement d'air (12) sur un corps (32), comprenant les étapes suivantes :
formation d'une pluralité de creux (16a) et/ou de parties saillantes (16b) en au moins un matériau ayant au moins un premier coefficient de dilatation thermique au niveau d'au moins une surface partielle (36) du corps (32) (S1) ; et
remplissage de la pluralité de creux (16a) et/ou d'une pluralité d'espaces intermédiaires entre des parties saillantes (16b) voisines au moins partiellement avec au moins une masse de remplissage (18) de sorte que la surface d'écoulement d'air (12) est au moins partiellement formée par l'au moins une masse de remplissage (18), l'au moins une masse de remplissage (18) possédant au moins un deuxième coefficient de dilatation thermique qui est supérieur d'au moins 243 kelvins à 273 kelvins à l'au moins un premier coefficient de dilatation thermique (S2).

14. Procédé selon la revendication 13, la pluralité de parties saillantes en tant que motif de points ou une couche structurée pourvue de la pluralité de creux et/ou de parties saillantes en l'au moins un matériau ayant l'au moins un premier coefficient de dilatation thermique étant imprimées au moins sur la surface partielle du corps.

15. Procédé selon l'une des revendications 12 à 14, une partie d'enveloppe d'aéronef pourvue de la surface d'écoulement d'air étant réalisée sous forme de corps.
